# EUROPEAN PATENT APPLICATION

(11) **EP 2 680 415 A1**
(43) Date of publication of application: **01.01.2014**
(21) Application number: 11859132.0
(22) Date of filing: 25.02.2011
(51) Int. Cl.: H02K 21/12, H02K 7/18, H02K 9/04

(54) **RARE-EARTH PERMANENT MAGNETIC CORELESS POWER GENERATOR SET**

(71) Applicant: Shenzhen Antuoshan Special Machine & Electrical Co., Ltd, Guangdong 518104 (CN)
(72) Inventor: LIANG, Xiwu, Guangdong 518104 (CN); GUO, Dongliang, Guangdong 518104 (CN); WANG, Heping, Guangdong 518104 (CN); LIANG, Haiyan, Guangdong 518104 (CN)
(74) Representative: Hellmich, Wolfgang
(86) International application number: PCT/CN2011/071329
(87) International publication number: WO 2012/113159

(57) **Abstract**

A rare earth permanent magnet coreless generator set (100) is provided, comprising: a frame (101), an engine (102), a generator (103), an inverter (104) and an output power box (105). The generator (103) comprises: a generator holder (2) mounted on the engine (102); a generator casing (4) mounted on the generator holder (2); a stator (9) mounted on the generator casing (4), comprising disc windings (15) and a shell (16) made of polymer covering the disc windings; a first magnetism stopper (171) mounted on an output shaft (22) by a flat key (21), wherein the first magnetism stopper (171) is provided between the stator (9) and the generator holder (2) for defining a suction chamber (24) and an exhaust chamber (25); a first diversion tunnel (181) connecting the suction chamber (24) to the exhaust chamber (25) is provided on the first magnetism stopper (171) and is close to the output shaft (22); a second magnetism stopper (172) mounted on the output shaft (22) by the flat key (21), wherein the second magnetism stopper (172) is provided on the stator (9) and is away from the first magnetism stopper (171); a plurality of rare earth permanent magnets (11) mounted on the first magnetism stopper (171) and the second magnetism stopper (172) by a permanent magnet clamp (10) and corresponding to the stator (9). The rare earth permanent magnet coreless generator set generates less heat and has higher power output efficiency.

## Description

**Field of Invention**

The present invention relates to an engine-driven generator set, and more particularly to a rare earth permanent magnet coreless generator set.

**Description of Related Arts**

A generator stator of a conventional engine-driven generator set is mounted coaxially with an engine crankshaft, and the generator stator is mounted directly on a casing or a side cover of the engine. An outer rotor with a shell structure is mounted on a power output end of the crankshaft of the engine, and a shell mouth is provided toward the engine and the generator stator. A cooling fan is mounted on a back of a shell body of the outer rotor for cooling the generator stator, rotor, etc. The generator stator of the generator is located between the engine and the shell body, therefore, although an insulation space is provided between the engine and the stator, heat generated by the running generator will radiate to the generator stator and lead to technical problems such as decrease of an output efficiency of the generator, rapidly aging of an output cable of the generator due to the heat and complex maintenance of the generator stator.

**Summary of the Present Invention**

Accordingly, in order to overcome the shortcomings, it is necessary for the present invention to provide a generator set with a low calorific value and a high output efficiency.

A rare earth permanent magnet coreless generator set, comprising:

a frame;

an engine mounted on the frame, wherein the engine comprises an output shaft;

a generator, comprising:

a generator holder mounted on the engine;

a generator casing mounted on the generator holder;

a stator mounted on the generator casing, comprising disc windings and a shell made of polymer covering the disc windings;

a first magnetism stopper mounted on the output shaft by a flat key, wherein the first magnetism stopper is provided between the stator and the generator holder for defining a suction chamber and an exhaust chamber; a first diversion tunnel communicating the suction chamber to the exhaust chamber is provided on the first magnetism stopper and is close to the output shaft;

a second magnetism stopper mounted on the output shaft by the flat key, wherein the second magnetism stopper is provided on the stator and is away from the first magnetism stopper;

a plurality of rare earth permanent magnets mounted on the first magnetism stopper and the second magnetism stopper by a permanent magnet clamp and corresponding to the stator;

a rib leaf mounted on the first magnetism stopper and close to the generator holder;

a cooling fan mounted on the first magnetism stopper and away from the permanent magnet clamp; and

an air deflector mounted on the generator casing;

an inverter mounted on the frame and electrically connected to a load unit; and

an output power box mounted on the frame and electrically connected to the inverter.

In a preferred embodiment, the engine is embodied as a diesel engine, a gasoline engine, a turbine, a hydraulic engine or a wind engine.

In the preferred embodiment, a second diversion tunnel is provided on the second magnetism stopper and is close to the output shaft.

In the preferred embodiment, the disc windings comprise radial and circumferential cross-wound copper wires.

In the preferred embodiment, the first magnetism stopper and the second magnetism stopper are embodied as concave-convex discs.

In the preferred embodiment, a sectional shape of each of the rare earth permanent magnets is trapezoidal, and the rare earth permanent magnets are symmetrical provided on the first magnetism stopper and the second magnetism stopper.

Therefore, when the engine of the rare earth permanent magnetic coreless generator set drives the output shaft to rotate, the rib leaf can stir air flow in the generator, and a pressure difference is generated in a radial direction in such a manner that the air flows from the suction chamber to the exhaust chamber through the first diversion tunnel. A part of the heat generated by the stator is taken to the exhaust chamber for cooling, and the air flows in such a manner that transfer of the heat to an outer wall is more sufficiently provided for reducing an operating temperature of the generator and increasing an output power of the engine.

**Brief Description of the Drawings**

According to a preferred embodiment of the present invention shown in the drawings and description of the present invention, the above and other objects, features and advantages will be further illustrated. In the drawings, the same reference number indicates the same part. The drawings are not deliberately scaled in proportion of actual sizes, and emphasis is put on spirit of the invention.

Fig. 1 is a perspective assembly view of a rare earth permanent magnetic coreless generator set according to the preferred embodiment of the present invention.

Fig. 2 is a sectional view of the engine and the generator showed in the Fig. 1 according to the preferred embodiment of the present invention.

Fig. 3 is a side view of the first magnetism stopper and the rare earth permanent magnets showed in the Fig. 2 according to the preferred embodiment of the present invention.

**Detailed Description of the Preferred Embodiment**

In order that the above object, features and advantages of the present invention are more apparent and understandable, following detailed description of the preferred embodiment of the present invention is provided according to the drawings. The embodiments have been shown and described for the purposes of illustrating the functional and structural principles of the present invention and is subject to change without departure from such principles. Therefore, this invention includes all modifications encompassed within the spirit and scope of the following preferred embodiment.

Secondly, the detailed description of the present invention is provided according to the drawings; during the description, for convenience of explanation, a sectional view of a structure will be enlarged in specific proportion. The drawings are utilized for illustrating the present invention, and the scope of protection should not be restricted. In addition, in actual production, a three-dimensional space of length, width and depth dimensions should be considered.

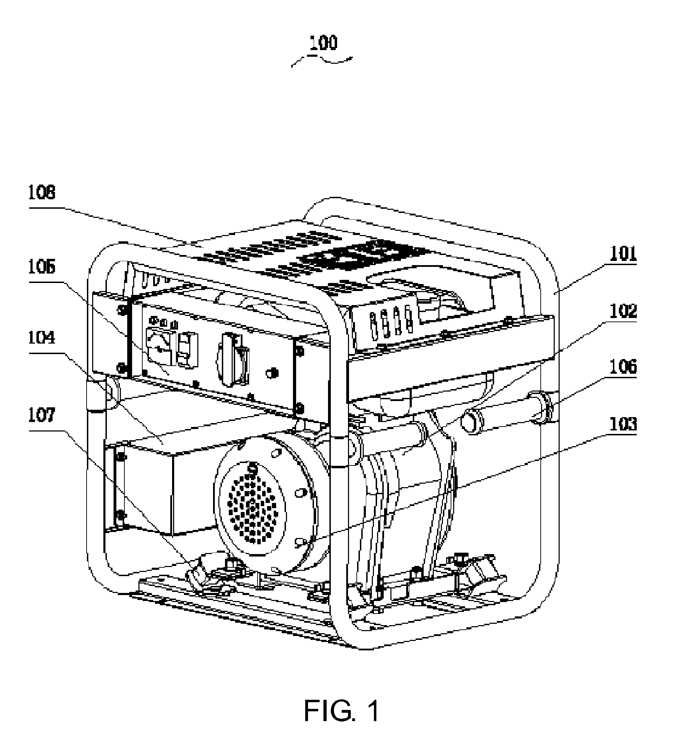

Referring to Fig. 1 of the drawings, a rare earth permanent magnet coreless generator set 100 according to a preferred embodiment of the present invention is illustrated, comprising: a frame 101, an engine 102, a generator 103, an inverter 104, an output power box 105, a handle 106, a vibration damping cushion 107 and a cover panel 108.

Preferably, the frame 101 is made of a bent metal tube. The engine 102 is mounted on the frame 101 with the vibration damping cushion 107 and screw bolts. In the present embodiment, the engine 102 is embodied as a diesel engine. It should be noticed that the engine 102 can also be embodied as a gasoline engine, a turbine, a hydraulic engine or a wind engine. The generator 103 is mounted on the engine 102 by the screw bolts.

The inverter 104 and the output power box 105 are mounted on the frame 101 by the screw bolts and are electrically connected to the generator 103 through a wire (not shown in the drawings) for stabilizing an output current.

The handle 106 is rotatably mounted on the frame 101 for providing an overall transport. The cover panel 108 is provided at a top of the frame 101 for covering below components such as the engine 102.

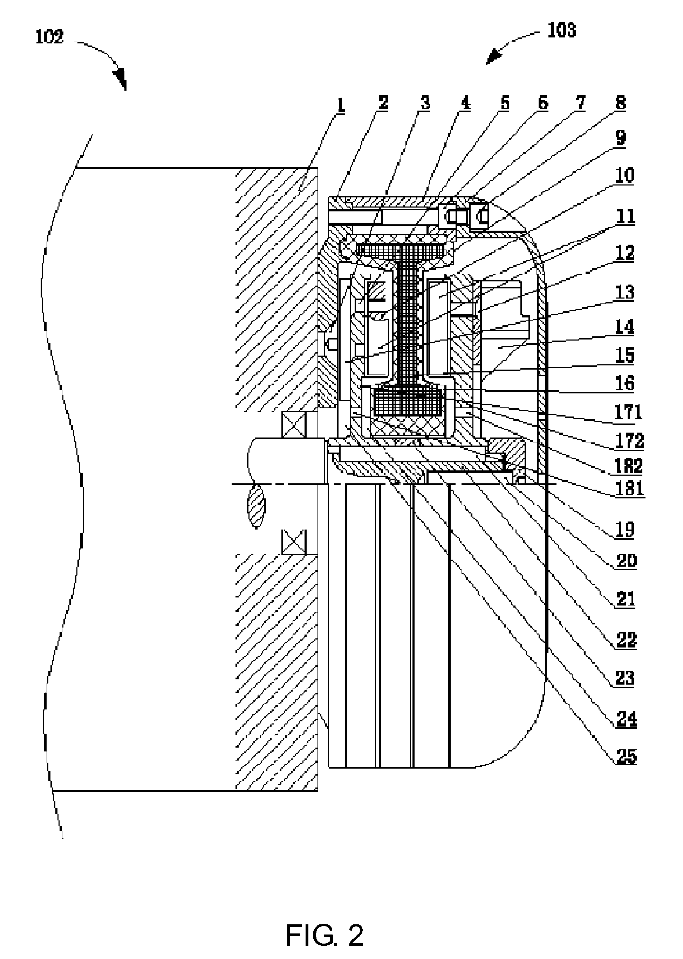

Referring to Fig. 2 of the drawings, a sectional view of the engine 102 and the generator 103 is illustrated. The engine 102 comprises an end cap 1 and an output shaft 22 rotatably provided through the end cap 1.

The generator 103 comprises a generator holder 2, a first screw 3, a generator casing 4, a second screw 5, a third screw 6, an air deflector 7, a fourth screw 8, a stator 9, a permanent magnet clamp 10, a plurality of rare earth permanent magnets 11, a fifth screw 12, a rib leaf 13, a cooling fan 14, disc windings 15, a shell 16, a first magnetism stopper 171, a second magnetism stopper 172, a gland 19, a sixth screw 20, a flat key 21, the diesel engine output shaft 22 and a separating casing 23.

The generator holder 2 is mounted on the end cap 1 of the engine 102 by the first screw 3.

The generator casing 4 is substantially a ring tube mounted on the generator holder 2 by the third screws 6, wherein the stator 9 is mounted in the generator casing 4.

The air deflector 7 is mounted on the generator casing 4 by the fourth screw 8, and forms a space for accommodating a rotor and a stator 9.

Any section along an axis of the stator 9 are substantially H-shaped, wherein the stator 9 comprises the disc windings 15 and the shell 16 made of polymer covering the disc windings 15. The shell 16 is utilized for mounting the disc windings 15 with polymer materials having good thermal conductivity and high strength, and forming a stable disc stator structure. The disc windings 15 are connected to the inverter 104 through a wire. The disc windings 15 comprise radial and circumferential cross-wound copper wires in such a manner that the radial copper wires effectively cut perpendicular axial magnetic field lines.

The first magnetism stopper 171 is made of a magnetically permeable material, and is a concave-convex disc. The first magnetism stopper 171 is mounted on the output shaft 22 by the flat key 21, and is provided between the stator 9 and the generator holder 2. The first magnetism stopper 171 divides a space between the stator 9 and the generator holder 2 as a suction chamber 24 close to the stator 9 and an exhaust chamber 25 close to the generator holder 2. A first diversion tunnel 181 communicating the suction chamber 24 to the exhaust chamber 25 is provided on the first magnetism stopper 171 and is close to the output shaft 22.

The rib leaf 13 is mounted on the first magnetism stopper 171 by a screw and is close to the generator holder 2, that is to say, the rib leaf 13 is provided in the exhaust chamber 25. The leaf rib 13 is made of a metallic or a non-metallic material and has a fan blade structure with a certain area. The rib leaf 13 can stir air flow in the generator 103, and a pressure difference is generated in a radial direction in such a manner that the air flows from the suction chamber 24 to the exhaust chamber 25 through the first diversion tunnel 181. A part of the heat generated by the stator 9 is taken to the exhaust chamber 25 for cooling, and the air flows in such a manner that transfer of the heat to an outer wall is more sufficiently provided for reducing an operating temperature of the generator 103 and increasing an output power of the engine 102.

A structure of the second magnetism stopper 172 is similar to a structure of the first magnetism stopper 171, wherein the second magnetism stopper 172 is mounted on the output shaft 22 by the flat key 21, the separating casing 23, the gland 19 and the sixth screw 20, and is provided on the stator 9 and is away from the first magnetism stopper 171. A second diversion tunnel is provided on the second magnetism stopper 172 and is close to the output shaft 22.

The cooling fan 14 is mounted on the second magnetism stopper 172 by the fifth screw 12 and is away from the permanent magnet clamp 10, and the cooling fan 14 has a similar function as the rib leaf 13.

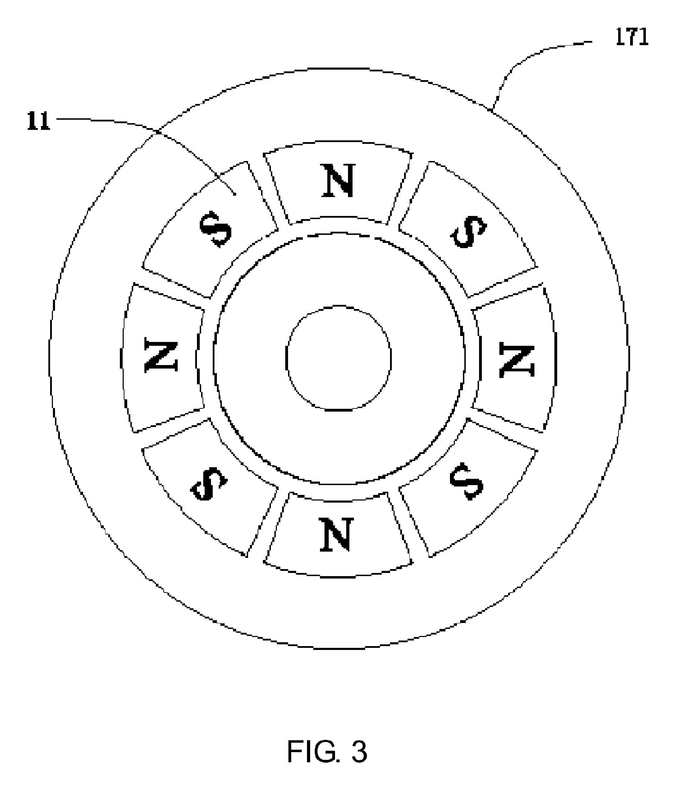

The rare earth permanent magnets 11 are mounted on the first magnetism stopper 171 and the second magnetism stopper 172 by the permanent magnet clamp 10 and the second screw 5, and the rare earth permanent magnets 11 correspond to the stator 9. The permanent magnet clamp 10 is made of a non-magnetically permeable material. Referring to Fig. 3, a sectional shape of each of the rare earth permanent magnets 11 is trapezoidal. The rare earth permanent magnets 11 are symmetrical provided on the first magnetism stopper 171 and the second magnetism stopper 172, and polarities of adjacent magnets is opposite in such a manner that the magnetic field lines are more concentrated. The rare earth permanent magnet 11 is a permanent magnet material made of an alloy of rare earth metals and transition metals with certain procedures, and neodymium ferrum boron (NdFeB), for example, is one of the permanent magnet materials.

During utilization, the engine 102 drives the output shaft 22 to rotate in such a manner that the rare earth permanent magnets 11 rotate with the first magnetism stopper 171 and the second magnetism stopper 172. The disc windings 15 in the stator 9 cut the magnetic field lines for generating an electromotive force. The current generated by the disc winding 15 is transmitted to the inverter 104 by the wire for appropriate transformation; finally, the current is inputted into the output power box 105 for subsequent utilization.

Therefore, the above rare earth permanent magnet coreless generator set has advantages as follows:

1) the generator 103 and the engine 102 are firmly and closely connected for saving the space;

2) the rare earth permanent magnets 11 are firmly mounted on the first magnetism stopper 171 and second magnetism stopper 172;

3) assembly procedures are simple;

4) an air gap is small, and an utilization ratio of magnetic energy is improved;

5) the stator 9 comprises the disc windings 15, and is coreless in such a manner that less heat is generated;

6) the generator 103 has a high efficiency;

7) an output torque is large;

8) the generator 103 has no slot effect and has a steady speed; and

9) a cooling effect on the generator 103 is excellent.

One skilled in the art will understand that the embodiment of the present invention as shown in the drawings and described above is exemplary only and not intended to be limiting.

## Claims

1. A rare earth permanent magnet coreless generator set, comprising:
a frame;
an engine mounted on said frame, wherein said engine comprises an output shaft;
a generator, comprising:
a generator holder mounted on said engine;
a generator casing mounted on said generator holder;
a stator mounted on said generator casing, comprising disc windings and a shell made of polymer covering said disc windings;
a first magnetism stopper mounted on said output shaft by a flat key, wherein said first magnetism stopper is provided between said stator and said generator holder for defining a suction chamber and an exhaust chamber; a first diversion tunnel communicating said suction chamber to said exhaust chamber is provided on said first magnetism stopper and is close to said output shaft;
a second magnetism stopper mounted on said output shaft by said flat key, wherein said second magnetism stopper is provided on said stator and is away from said first magnetism stopper;
a plurality of rare earth permanent magnets mounted on said first magnetism stopper and said second magnetism stopper by a permanent magnet clamp and corresponding to said stator;
a rib leaf mounted on said first magnetism stopper and close to said generator holder;
a cooling fan mounted on said first magnetism stopper and away from said permanent magnet clamp; and
an air deflector mounted on said generator casing;
an inverter mounted on said frame and electrically connected to a load unit; and
an output power box mounted on said frame and electrically connected to said inverter.

2. The rare earth permanent magnet coreless generator set, as recited in claim 1, wherein engine is a diesel engine, a gasoline engine, a turbine, a hydraulic engine or a wind engine.

3. The rare earth permanent magnet coreless generator set, as recited in claim 1, wherein a second diversion tunnel is provided on said second magnetism stopper and is close to said output shaft..

4. The rare earth permanent magnet coreless generator set, as recited in claim 1, wherein said disc windings comprise radial and circumferential cross-wound copper wires.

5. The rare earth permanent magnet coreless generator set, as recited in claim 1, wherein said first magnetism stopper and said second magnetism stopper are concave-convex discs.

6. The rare earth permanent magnet coreless generator set, as recited in claim 1, wherein a sectional shape of each of said rare earth permanent magnets is trapezoidal, and said rare earth permanent magnets are symmetrical provided on said first magnetism stopper and said second magnetism stopper.
